# EUROPÄISCHE PATENTSCHRIFT

(11) **EP 1 334 679 B1**
(45) Veröffentlichungstag und Bekanntmachung des Hinweises auf die Patenterteilung: **27.04.2005**
(21) Anmeldenummer: 03002707.2
(22) Anmeldetag: 06.02.2003
(51) Int. Cl.: A47J 36/24

(54) **Vorrichtung zum Warmhalten von Speisen**
Appliance to keep food hot
Appareil pour maintenir des repas chaud

(30) Priorität: 12.02.2002 DE 20202140 U
(43) Veröffentlichungstag der Anmeldung: 13.08.2003
(73) Patentinhaber: Wessling, Hans, 64572 Büttelborn (DE)
(72) Erfinder: Wessling, Hans, 64572 Büttelborn (DE)
(74) Vertreter: KEIL & SCHAAFHAUSEN

(56) Entgegenhaltungen:
- DE-A- 3 343 315
- DE-U- 8 625 254
- FR-A- 2 656 067

## Beschreibung

Die Neuerung bezieht sich auf eine Vorrichtung zum Warmhalten und Erwärmen von Speisen oder Gefäßen. Vorrichtungen dieser Art, sogenannte Rechauds sind in einer Vielzahl sowohl in technischer sowie gestalterischer Form bekannt. Es gibt solche mit Teelichtern oder Heizpaste als Heizquelle oder auch solche die elektrisch beheizt werden, wie aus dem Dokument DE 33 43 315 bekannt. Die wesentlichen Nachteile der bekannten nicht elektrisch beheizten Vorrichtungen der genannten Art stellen sich in mangelnder Standfestigkeit der warmzuhaltenden Gefäße mit Speisen auf der Platte, einer Rußbelästigung durch nicht sachgemäße Ausgestaltung sowie einer Überhitzung der gesamten Vorrichtung dar.

Die der Neuerung zu Grunde liegende Aufgabe besteht in der Schaffung einer Vorrichtung der genannten Art, die die vorgenannten Nachteile vermeidet sowie eine raumsparende Aufbewahrung und auch eine Stapelbarkeit bei dem Bedarf mehrerer Vorrichtungen - wie es im Gastgewerbe notwendig ist - ermöglicht.

Die gestellte Aufgabe wird neuerungsgemäß durch die im kennzeichnenden Teil des Anspruches 1 enthaltenen Merkmale gelöst. Durch die rundherum abgekantete Platte zum Abstellen der warmzuhaltenden Gefäße mit Speisen bzw. dem Erwärmen der Gefäße, wird ein Wärmestau unterhalb der Platte gebildet und damit eine Erwärmung der Platte gewährleistet. Andererseits wird eine Überhitzung der Platte und Ständer dadurch vermieden, daß überschüssige Wärme nach allen Seiten in Folge der rundherum offenen Platte abfließen kann. Die als Griffe dienenden Einbiegungen der Ständerstege werden dadurch nicht zu stark erhitzt und die Vorrichtung kann bei Bedarf abgeräumt werden, ohne daß ein Verbrennen der Finger des Bedienenden befürchtet werden muß.

Die Halterungen für die Heizquellen sind nicht mit der Wärmeplatte verbunden und lassen sich bedarfsentsprechend verschieben. In Folge der abgebogenen Enden ist eine leichte Handhabung gewährleistet.

Gemäß der Neuerung sind die Ständer vorzugsweise an den Schmalseiten der Wärmeplatte angebracht. Diese Anordnung spart Material und läßt eine raumsparende Unterbringung zu, wenn die Platte auf die Seite gekippt wird und dadurch nur einen schmalen Raum beansprucht. Auch ist eine Stapelbarkeit der Vorrichtung gegeben.

Weitere Einzelheiten der Neuerung ist der Beschreibung der beigefügten Zeichnung zu entnehmen. Dabei zeigen:
- Fig. 1: eine Draufsicht auf die Vorrichtung gemäß Neuerung,
- Fig. 2: eine Seitenansicht der Vorrichtung,
- Fig. 3: eine Ansicht A nach Fig.2,
- Fig. 4: eine Draufsicht auf den Halter der Hitzequelle,
- Fig. 5: eine Seitenansicht des Halters,
- Fig. 6: einen Schnitt B nach Fig. 5.

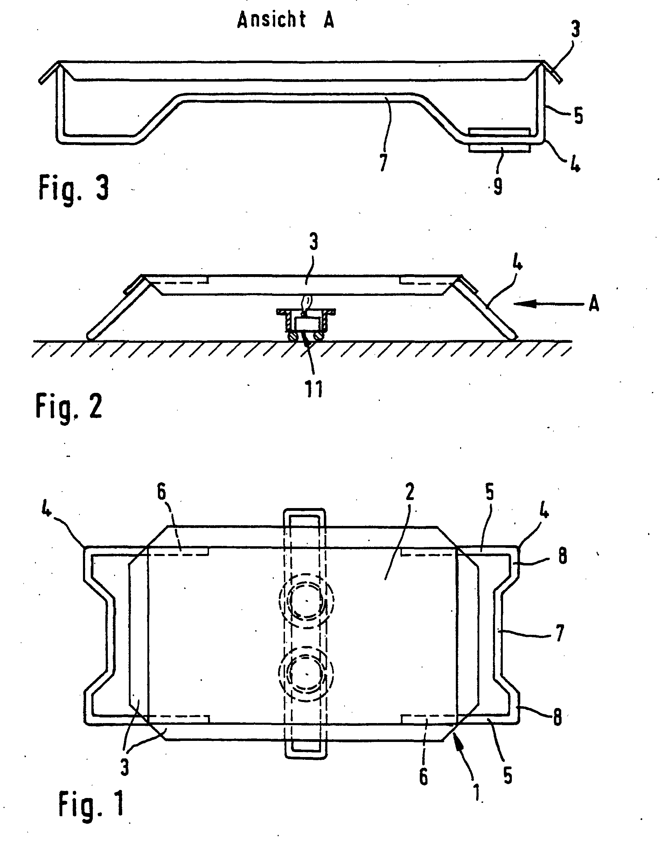

In Figur 1 ist eine Draufsicht der neuerungsgemäßen Vorrichtung 1 gezeigt. Die dünne Wärmehalteplatte 2 ist an ihren Rändern 3 abgekantet, z. B. in einem Winkel von ca. 45°. Die an den Schmalseiten befestigten Ständer 4 sind U-förmig ausgebildet und Schenkel 5 des U an ihren Ende so abgebogen, daß sich zwischen den abgebogenen Teilen 6 und dem Rest des Ständers ein Winkel von ca. 135° bildet, wie aus Figur 2 deutlich ersichtlich. Die abgebogenen Teile sind an der Unterseite der Wärmeplatte 2 z. B. durch Verschweißen befestigt. In Folge der winkeligen Ausbildung der Ständer sind die eingebogenen Griffe 7 leicht zu handhaben. Die beidseitig der Griffe ebenen Abschnitte bilden die Füße 8 der Vorrichtung. Diese können mit einem rutschfesten Material, wie bei 9 gezeigt, ummantelt oder versehen sein. Vorzugsweise sind die Ständer aus Rundstäben oder Rohren gefertigt.

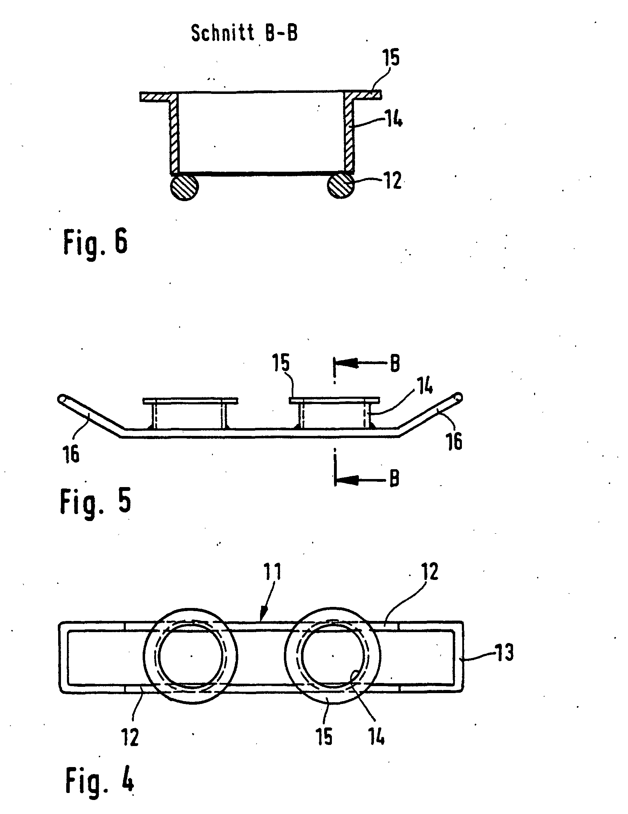

Der davon getrennt angeordnete Halter 11 für die Heizquelle in dem Beispiel Teelichter ist in Draufsicht in Figur 4 dargestellt. Dieser Halter 11 besteht aus einem rechteckigen geschlossenen Rahmen aus Rundstäben und zwar gebildet aus zwei parallelen Abschnitten 12 und zwei abgerundeten oder eckigen Verbindungen 13 an deren Enden. Auf den beiden parallelen Abschnitten sind im Ausführungsbeispiel zwei in sich geschlossene kreisförmige Streifen, d. h. Ringe 14 zur Aufnahme der Teelichter vorgesehen. Es liegt im Rahmen der Erfindung, auch andere Gestaltungen mit Streifen zu treffen. Der obere Rand der Ringe ist rechtwinklig zu einem Bund 15 abgekantet (s. Fig. 6). Die Enden des Rahmens 11 sind leicht nach oben, also in Richtung der Ringe 14 zu einem Griff 16, abgebogen, jedoch nicht über den Bund 15, wie in Figur 5 zu sehen ist, heraus. Auf diese Weise kann der Halter leicht erfaßt und unter den gewünschten Bereich der Platte geschoben werden. Es können pro Warmhalteplatte ein oder mehrere Halter 11 für die Heizquellen eingesetzt werden. Der Bund 15 in Verbindung mit der vorgegebenen Abbiegung der Griffe 16 ermöglicht eine sichere Stapelung der Halter. Es liegt im Rahmen der Neuerung, daß an Stelle der beiden Ringe 14, wie in dem Ausführungsbeispiel gezeigt, nur ein Ring oder auch mehrere Ringe pro Halter zum Einsatz von Teelichtern vorgesehen sein können.

Es hat sich gezeigt, daß mit einem Abstand von ca. 4,5 cm zwischen den Heizquellen und der Wärmeplatte optimale Ergebnisse erlangt werden und eine Rußverschmutzung der Plattenunterseite vermieden wird. Anstelle von Teelichtern können auch Behälter mit der gängigen Heizpaste eingesetzt werden.

Sämtliche Teile der Vorrichtung sind aus Edelstahl gefertigt und dadurch in üblicher Art einfach zu reinigen. Es hat sich gezeigt, daß mit der Vorrichtung gemäß der Neuerung eine optimale Vorrichtung zum Erwärmen und Warmhalten von Speisen geschaffen worden ist, die einen sicheren Stand der Gefäße ermöglicht und eine leichte einfache Handhabung gewährleistet.

## Patentansprüche

1. Vorrichtung zum Warmhalten und/oder Erwärmen von Speisen in oder ohne Gefäße aus einer ebenen Platte und einer oder mehreren Heizquellen **gekennzeichnet durch**
a) eine ebene, rechteckige oder ovale Platte (2) deren Ränder (3) in Richtung auf die Heizquelle abgekantet ist,
b) **durch** zwei getrennt voneinander angeordnete U-förmige aus einem gebogenen Stab oder Rohr geformte Ständer (6), deren freie abgebogene Schenkelenden mit der Platte (2) fest verbunden sind,
c) getrennt von der Platte befindlicher Halter (11) für die Heizquellen in Form von aus einem Stab oder Rohr gebildeten Rahmen.

2. Vorrichtung nach Anspruch 1
**dadurch gekennzeichnet,**
**daß** die Abkantungen (3) der Platte (2) ca. 45° betragen.

3. Vorrichtung nach Anspruch 1
**dadurch gekennzeichnet,**
**daß** die U-förmigen Ständer (4) an ihrem Steg zu einem Griff (7) mittig eingebogen sind und die davon beidseits befindlichen ebenen Abschnitte die Füße (8) des Ständers (4) bilden.

4. Vorrichtung nach Anspruch 3, **dadurch gekennzeichnet, dass** die Füße (8) mit rutschfestem Material bei (9) versehen oder ummantelt sind.

5. Vorrichtung nach Anspruch 1
**dadurch gekennzeichnet,**
**daß** die Ständer (4) an den Schmalseiten der Platte (2) vorgesehen sind.

6. Vorrichtung nach Anspruch 1
**dadurch gekennzeichnet,**
**daß** die Ständer (4) an der Breitseite der Platte (2) vorgesehen sind.

7. Vorrichtung nach Anspruch 1
**dadurch gekennzeichnet,**
**daß** der Halter (11) aus einem geschlossenen aus Stabmaterial gebogenen länglichen Rahmen besteht, der aus zwei parallel verlaufenden untereinander verbundenen Längsabschnitten (12) besteht.

8. Vorrichtung nach Anspruch 7
**dadurch gekennzeichnet,**
**daß** die parallel verlaufenden Abschnitte (12) oder Rohre des Halters (11) ein oder mehrere Aufnahmeringe (14) oder andere als Streifen gebildete Aufnahmeteile zum Einsatz der Heizquellen trägt.

9. Vorrichtung an Anspruch 8
**dadurch gekennzeichnet,**
**daß** die Aufnahmeringe (14) oder dergleichen am oberen Rand rechtwinklig zu einem Bund (15) abgekantet sind.

10. Vorrichtung nach Anspruch 1
**dadurch gekennzeichnet,**
**daß** die unter a), b) und c) genannten Teile aus Edelstahl gefertigt sind.

## Claims

1. A device for keeping food hot and/or heating food in or without containers, consisting of a flat plate and one or more heating sources,
**characterised by**
a) a flat, rectangular or oval plate (2), the edges of which are folded towards the heating source,
b) by two stands (6), which are disposed separately from each other, are shaped in a U shape from a bent bar or tube, the free, bent leg ends of which are securely connected to the plate (2),
c) a holder (11), situated separately from the plate, for the heating sources in the form of a frame formed from a bar or tube.

2. A device according to Claim 1,
**characterised in that** the folded portions (3) of the plate (2) are folded at roughly 45°.

3. A device according to Claim 1,
**characterised in that** the U-shaped stands (4) are centrally bent inwardly at their web to form a handle (7) and the plane portions situated on either side form the feet (8) of the stand (4).

4. A device according to Claim 3,
**characterised in that** the feet (8) are provided with anti-slip material at (9) or are sheathed.

5. A device according to Claim 1,
**characterised in that** the stands (4) are provided at the narrow sides of the plate (2).

6. A device according to Claim 1,
**characterised in that** the stands (4) are provided at the wide side of the plate (2).

7. A device according to Claim 1,
**characterised in that** the holder (11) consists of a closed, oblong frame bent from bar material, which consists of two mutually parallel, connected longitudinal portions (12).

8. A device according to Claim 7,
**characterised in that** the parallel portions (12) or tubes of the holder (11) bear one or more housing rings (14) or other housing parts formed as strips for the insertion of the heating sources.

9. A device according to Claim 8,
**characterised in that** the housing rings (14) or the like at the upper edge are folded at right angles to form a collar (15).

10. A device according to Claim 1,
**characterised in that** the parts mentioned under a), b) and c) are produced from special steel.

## Revendications

1. Appareil pour maintenir chaud et/ou pour chauffer des aliment dans ou sans récipient, constitué d'une plaque plane et d'une ou plusieurs sources de chaleur, **caractérisé par**
a) une plaque (2) plane, rectangulaire ou ovale dont les bords (3) sont repliés en direction de la source de chaleur,
b) deux montants (6) disposés séparément l'un de l'autre en forme de U réalisé dans une baguette ou un tube cintré, dont les extrémités libres des branches cintrées sont reliées fixement à la plaque (2),
c) un support (11) séparé de la plaque pour des sources de chaleur, ayant la forme d'un cadre formé par une baguette ou un tube.

2. Appareil selon la revendication 1, **caractérisé en ce que** les pliures (3) de la plaque (2) s'élèvent à environ 45°.

3. Appareil selon la revendication 1, **caractérisé en ce que** les montants (4) en forme de U sont cintrés au milieu dans leur âme pour former une poignée (7) et les sections planes situées des deux côtés de celle-ci formant les pieds (8) du montant (4).

4. Appareil selon la revendication 3, **caractérisé en ce que** les pieds (8) sont munis ou recouverts d'un matériau antidérapant à l'endroit (9).

5. Appareil selon la revendication 1, **caractérisé en ce que** les montants (4) sont prévus sur les côtés étroits de la plaque (2).

6. Dispositif selon la revendication 1, **caractérisé en ce que** les montants (4) sont prévus sur les côtés larges de la plaque (2).

7. Dispositif selon la revendication 1, **caractérisé en ce que** le support (11) est constitué d'un cadre oblong fermé cintré réalisé dans un matériau en acier qui comprend deux sections longitudinales (12) s'étendant parallèlement et reliées entre elles.

8. Dispositif selon la revendication 7, **caractérisé en ce que** les deux sections (12) s'étendant parallèlement ou les tubes du support (11) portent un ou plusieurs anneaux de réception (14) ou d'autres pièces de réception ayant la forme de bandes pour l'utilisation des sources de chaleur.

9. Appareil selon la revendication 8, **caractérisé en ce que** les anneaux de réception (14) ou les dispositifs similaires sont pliés à angle droit sur le bord supérieur pour former une collerette (15).

10. Appareil selon la revendication 1, **caractérisé en ce que** les pièces citées aux points a), b) et c) sont fabriquées en acier.
